# EUROPEAN PATENT APPLICATION

(11) **EP 1 086 850 A2**
(43) Date of publication of application: **28.03.2001**
(21) Application number: 00120553.3
(22) Date of filing: 20.09.2000
(51) Int. Cl.: B60N 2/46

(54) **Vehicle armrest**

(30) Priority: 21.09.1999 IT TO990808
(71) Applicant: GESTIND-M.B." MANIFATTURA DI BRUZOLO" S.P.A, I-10050 Bruzolo (Torino) (IT)
(72) Inventor: Lomagno, Mauro, 10060 Frossasco (IT); Bui, Davide, 10050 Borgone (IT)
(74) Representative: Jorio, Paolo

(57) **Abstract**

In a vehicle armrest (1), a supporting body (6) for supporting the arm of a user is connected to a connecting body (9) connected integrally, in use, to a supporting structure (3), and is rotated about a hinge axis (14) by an adjusting assembly (18, 23) for setting and maintaining the supporting body to and in any angular position about the hinge axis (14); the adjusting assembly (18, 23) having a control shaft (18) coaxial with the hinge axis (14) and connected to the supporting body (6) in an angularly fixed position; a motor (24) having an output shaft (27) perpendicular to the control shaft (18); and a mechanical transmission (29) interposed between the control shaft (18) and the output shaft (27).

## Description

The present invention relates to an armrest, and in particular to an adjustable vehicle armrest.

Vehicles in general, and motor vehicles in particular, normally employ adjustable armrests hinged to a fixed body to rotate, about a hinge axis, between a lowered work position and a substantially vertical raised position, and which comprise a hollow, at least partly upholstered supporting body, and an angular adjusting device housed inside the hollow body and user-operated manually to adjust the angular position of the armrest about the lowered position. In most applications, the adjusting devices comprise locating teeth connected integrally to a fixed supporting body; movable teeth connected to the armrest and meshing with the locating teeth; and a manually operated actuating assembly for disengaging the teeth to adjust the angular position of the armrest.

Though widely used, by retaining the armrest in the selected position regardless of any action exerted on the armrest itself, known adjusting devices of the above type have the drawback of not permitting continuous angular adjustment of the armrest between the raised and lowered positions, so that the armrest can only be set to and retained in a limited number of angular position, and these only about the lowered position. To shift from one position to another, and between the lowered and raised positions in general, the user must first release the actuating assembly manually, and then rotate the armrest manually about the hinge axis. In most cases, the latter operation is particularly awkward when the armrest is located close to the raised position.

Moreover, the construction characteristics of known armrests, and in particular location of the adjusting device inside the supporting body, prevent the armrest from being modeled to specific geometric requirements, e.g. to achieve a given design and/or size.

It is an object of the present invention to provide an armrest designed to eliminate the aforementioned drawbacks, and which at the same time is highly reliable, efficient, compact, and cheap to produce.

According to the present invention, there is provided an armrest for a vehicle, in particular a motor vehicle; the armrest comprising a supporting body for supporting the arm of a user; a connecting body connectable integrally to a supporting structure; hinge means for connecting said supporting body to the connecting body in rotary manner about a hinge axis; and adjusting means for adjusting the position of said supporting body about said hinge axis; characterized in that said adjusting means comprise a control shaft coaxial with said hinge axis and connected to said supporting body in an angularly fixed position; a motor comprising an output shaft perpendicular to said control shaft; and a mechanical transmission interposed between said control shaft and said output shaft.

A non-limiting embodiment of the invention will be described by way of example with reference to the accompanying drawings, in which:
Figure 1 shows a section of a preferred embodiment of the armrest according to the present invention;
Figure 2 shows a section along line II-II in Figure 1;
Figure 3 shows a variation of a detail in Figure 2;
Figure 4 shows the Figure 1 view illustrating a variation of a detail in Figure 1.

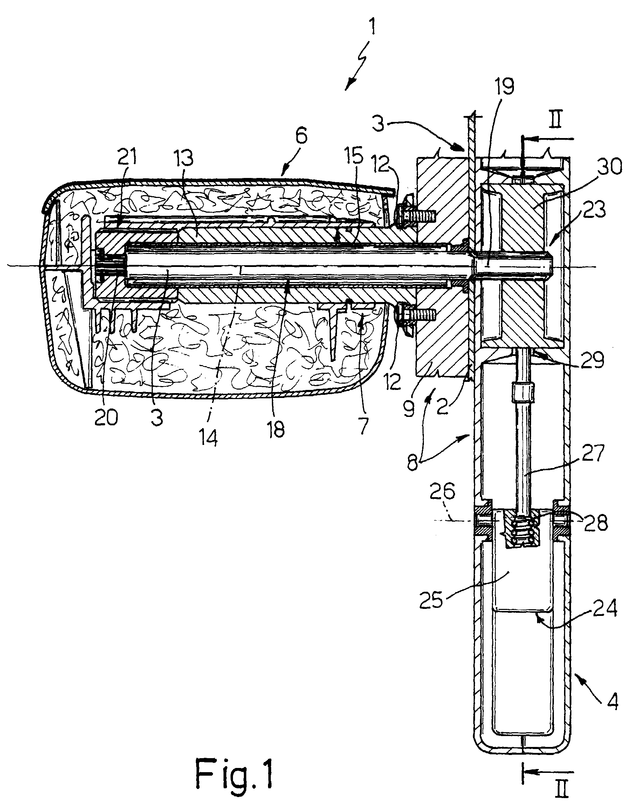

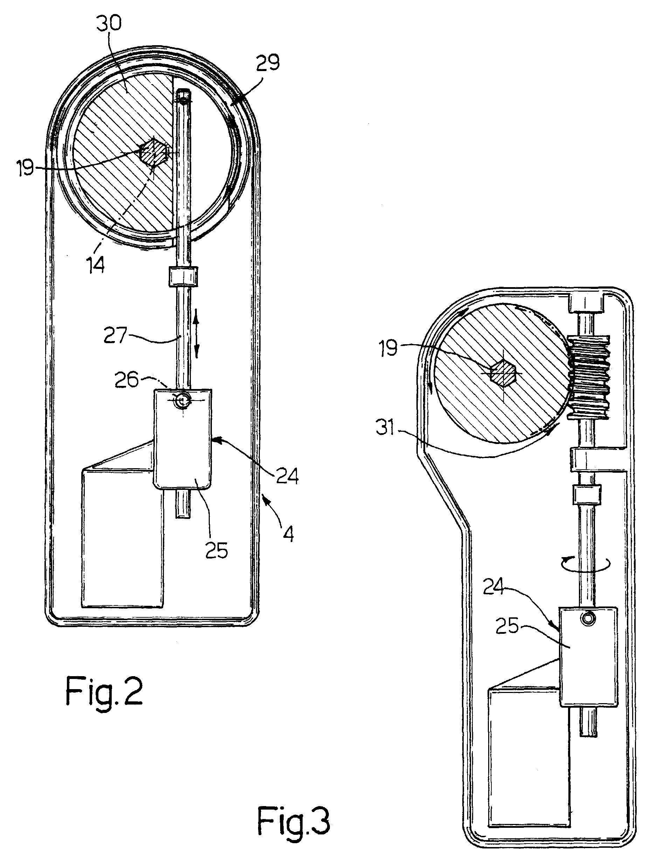

In Figures 1 and 2, number 1 indicates a vehicle armrest. In the example shown, armrest 1 is connected to the frame 2 of a backrest 3 of the vehicle seat (shown partly), and comprises a box-shaped connecting frame 4 housed inside backrest 3 and connected integrally in known manner to frame 2 of backrest 3. Armrest 1 also comprises a user supporting body 6 having an inner reinforcing structure 7 and an assembly 8 for connecting and adjusting supporting body 6 to and with respect to seatback 3.

As shown, particularly in Figure 1, assembly 8 comprises an interface body 9, which is located outside frame 2, is connected integrally in known manner to frame 2, and is fitted integrally, by means of a number of screws 12, with a tubular pin 13. Pin 13 has a respective axis 14, projects from body 9, and engages in rotary and axially fixed manner a cylindrical seat 15 in reinforcing structure 7 to enable supporting body 6 to rotate in opposite directions about axis 14.

A control shaft 18 extends, coaxially with axis 14, through the pin, forms part of assembly 8, and comprises an end portion 19 connected in rotary manner to interface body 9 and projecting inside frame 4. Shaft 18 also comprises an opposite end portion 20, which projects beyond pin 13 into reinforcing structure 7, is connected in angularly fixed manner to reinforcing structure 7 by means of a known splined coupling 21, and is locked axially with respect to pin 13. Shaft 18 and, therefore, supporting body 6 are rotated about axis 14 by a powered actuating device 23 housed entirely inside frame 4 and forming part of assembly 8. Device 23 comprises a known electric quill motor 24 in turn comprising an outer casing 25 hinged in known manner to frame 4 to rock about an axis 26 parallel to axis 14. Motor 24 has a sliding output shaft 27 extending perpendicularly to shaft 18 and connected irreversibly to the rotor 28 of motor 24, preferably by means of a recirculating-ball screw-nut screw device. Shaft 27 defines the connecting rod of a connecting rod-crank transmission 29, the crank of which is defined by a portion of a gear 30 fitted to portion 19 of shaft 18.

In the Figure 3 variation, casing 25 of motor 24 is connected integrally to frame 4, and output shaft 27 is connected in rotary and axially fixed manner to frame 4, and is connected to control shaft 18 by means of an irreversible gear transmission 31, conveniently a worm-helical gear transmission wherein the helical gear is fitted to portion 19, and the worm is connected integrally to shaft 27. Alternatively, in a variation not shown, the transmission comprises two bevel gears.

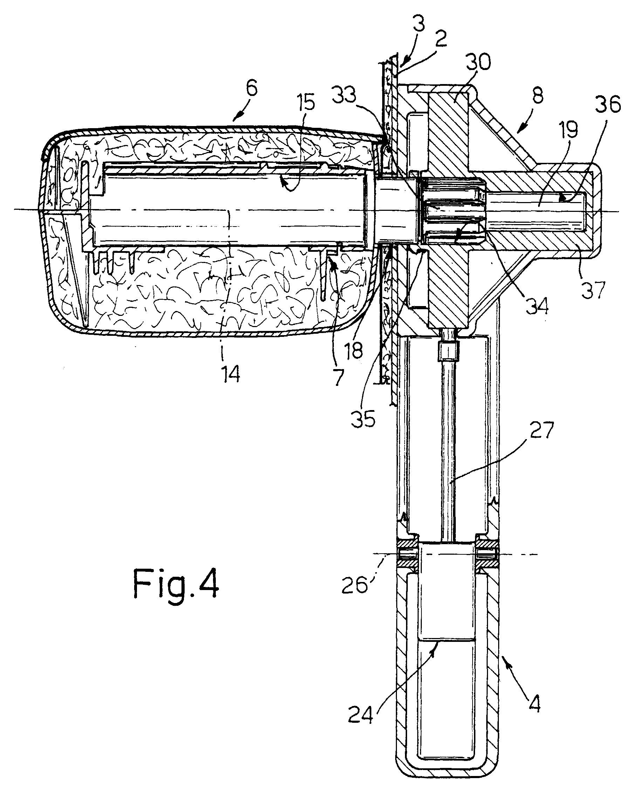

In the Figure 4 variation, assembly 8 has no body 9 and no pin 13; gear 30 is connected in axially fixed manner to frame 4 to rotate about axis 14; and shaft 18 is connected integrally to reinforcing structure 7 inside seat 15, e.g. by means of screws not shown, and projects outwards of supporting body 6. More specifically, shaft 18 comprises a splined intermediate portion 33 positively engaging a splined hub 34 of gear 30 and locked axially with respect to hub 34 by means of a retaining ring 35. End portion 19 of the shaft projecting inside frame 4, on the other hand, engages a cylindrical seat 36 coaxial with axis 14 and formed in a tubular supporting portion 37, which is integral with gear 30, extends inside frame 4, and is connected in rotary and axially fixed manner to frame 4.

In actual use, by activating motor 24, gear 30 and, hence, shaft 18 can be rotated about axis 14 to set supporting body 6 to any angular position within two limit positions corresponding to a raised rest position and a lowered work position of the armrest.

Unlike known solutions, the presence of motor 24 and the irreversibility of the transmissions or the output shaft/rotor connection of motor 24 therefore provide for both continuous adjustment of the angular position of supporting body 6 about hinge axis 14, and for retaining armrest 1 in the selected position regardless of any force applied by the user on supporting body 6, and with no particular physical effort required on the part of the user. Moreover, the construction characteristics of armrest 1 - in particular the fact that both motor 24 and transmission 29 are located entirely outside supporting body 6 - enable supporting body 6 to be formed in any manner, and in particular of any shape to achieve maximum compactness and/or increase the space inside, in the event this is used as a storage compartment.

The location of motor 24 and transmission 29 outside supporting body 6 also considerably reduces the weight of the armrest, thus enabling relatively effortless adjustment, and greatly simplifies electrical connection of motor 24 to its control circuit. Armrest 1 as described, in fact, requires no loose cables or undesired sliding connections between backrest 3 and body 6.

The particular connection of gear 30 to frame 4 shown in Figure 4 provides for connecting body 6 to backrest 3 extremely easily and, above all, quickly, by simply connecting frame 4 to frame 2 of the seat, e.g. by means of straightforward screws, and axially inserting portions 33 and 19 inside hub 34 of gear 30 and supporting body 37 respectively.

Clearly, changes may be made to armrest 1 as described herein without, however, departing from the scope of the present invention. In particular, motor 24 and/or transmission 29 may be replaced with motors and/or transmissions other than those indicated by way of example; devices other than the one indicated may be provided to hinge body 6 to backrest 3; and, finally, frame 4 may be of a different shape and/or size from those indicated, e.g. to permit connection to a connecting body other than the backrest frame, and in particular to a portion of the floor extending alongside the seat.

## Claims

1. An armrest (1) for a vehicle, in particular a motor vehicle; the armrest (1) comprising a supporting body (6) for supporting the arm of a user; a connecting body (9; 4) connectable integrally to a supporting structure (3); hinge means (13, 7; 19, 37) for connecting said supporting body (6) to the connecting body (9; 4) in rotary manner about a hinge axis (14); and adjusting means (18, 23) for adjusting the position of said supporting body about said hinge axis (14); characterized in that said adjusting means (18, 23) comprise a control shaft (18) coaxial with said hinge axis (14) and connected to said supporting body (6) in an angularly fixed position; a motor (24) comprising an output shaft (27) perpendicular to said control shaft (18); and a mechanical transmission (29) interposed between said control shaft (18) and said output shaft (27).

2. An armrest as claimed in Claim 1, characterized in that said control shaft (18) comprises an end portion (19) projecting beyond said supporting body (6); said transmission (29) being connected to said end portion (19).

3. An armrest as claimed in Claim 1 or 2, characterized in that said connecting body (4) supports at least said motor (24) and said transmission (29).

4. An armrest as claimed in Claim 3, characterized in that said connecting body (4) is a hollow body completely housing said motor (24) and said transmission (29).

5. An armrest as claimed in any one of the foregoing Claims, characterized in that said output shaft (27) is a sliding shaft, and said transmission (29) comprises linear-to-rotary motion converting means (27, 30).

6. An armrest as claimed in Claim 5, characterized in that said motion converting means comprise a connecting rod-crank assembly (27, 30).

7. An armrest as claimed in Claim 6, characterized in that said connecting rod-crank assembly comprises a crank (30) fitted to said control shaft (18).

8. An armrest as claimed in Claim 7, characterized in that said output shaft (27) rocks about a pivot axis (26) parallel to said hinge axis (14).

9. An armrest as claimed in any one of the foregoing Claims, characterized by comprising irreversible connecting means (28) interposed between said motor (24) and said control shaft (18).

10. An armrest as claimed in Claim 7, characterized in that said connecting means comprise a recirculating-ball screw-nut screw assembly (28).

11. An armrest as claimed in any one of the foregoing Claims, characterized in that said control shaft (18) carries an axially splined portion (21, 33); said splined portion forming part of an angular locking assembly interposed between said control shaft (18) and said supporting body (6) or said transmission (29).

12. An armrest as claimed in any one of the foregoing Claims, characterized in that said transmission (31) is a gear transmission.

13. An armrest as claimed in Claim 12, characterized in that said transmission is a worm-helical gear transmission (31).

14. An armrest as claimed in any one of the foregoing Claims, characterized in that said hinge means comprise a hollow hinge pin (13); said control shaft (18) extending through said hinge pin (13).

15. An armrest as claimed in any one of Claims 1 to 13, characterized in that said control shaft (18) forms part of said hinge means (19, 37).
